Europäisches Patentamt

European Patent Office

Office européen des brevets

(11) Numéro de publication: **0 395 556**
**A1**

# (12) DEMANDE DE BREVET EUROPEEN

(21) Numéro de dépôt: 90460020.2

(22) Date de dépôt: 18.04.90

(51) Int. Cl.5: **C12N 1/16, A23J 1/18,**
**A23K 1/00, //(C12N1/16,**
**C12R1:86,1:865)**

(30) Priorité: 26.04.89 FR 8905844

(43) Date de publication de la demande:
**31.10.90 Bulletin 90/44**

(84) Etats contractants désignés:
**AT BE CH DE DK ES GB GR IT LI LU NL SE**

(71) Demandeur: **Cohas, Pascal**
**10, Cité Jean Mermoz**
**F-53000 Laval(FR)**

Demandeur: **Cohas, Patrice**
**82, rue Vallières**
**F-57000 Metz(FR)**

(72) Inventeur: **Cohas, Pascal**
**10, Cité Jean Mermoz**
**F-53000 Laval(FR)**
Inventeur: **Cohas, Patrice**
**82, rue Vallières**
**F-57000 Metz(FR)**

(74) Mandataire: **Le Guen, Louis François**
**CABINET Louis LE GUEN 38, rue Levavasseur**
**B.P. 91**
**F-35802 Dinard Cédex(FR)**

(54) **Méthode de fabrication de levures lactiques pour animaux.**

(57) La méthode consiste, dans une première phase, à réaliser une fermentation lente par procédé physico-chimique à basse température de 18 à 38° C, d'une durée comprise entre 1 et 72 heures, sous agitation programmée, d'un mélange de composition suivante:

- 30 à 80 % Levures humides ou levures sèches ou levure de bière ou sous-produit de fermentation de bière ou sous-produit de fabrication des levures à cellules vivantes.
- 1 à 10 % Mélasse de canne à sucre ou de betterave sous forme de sirop ou de poudre.
- 10 à 35 % Lactose
- 0,5 à 5 % Acide lactique
- 0,1 à 2 % Ammoniaque
- 0,1 à 2 % Acide citrique
- 0,1 à 2 % Soufre
- 0,025 à 1 % Acide pantothénique
- 0,025 à 1 % Amide nicotinique
- 0,050 à 1 % Vitamine B1
- 0,050 à 1 % Vitamine C
- 0,050 à 2 % dl-Méthionine
- 0,050 à 2 % Choline chlorure
- 0,050 à 2 % Lysine chlorhydrate
- 0,100 à 2 % Hypophosphite de magnésium
- 0,100 à 2 % Chlorure de potassium
- 0,100 à 2 % Chlorure de sodium
- 0,500 à 5 Sorbitol
- 2 à 12 % Urée

avec injection d'air en quantité déterminée en fonction de la température, de la rapidité de fermentation, du volume du fermentateur et de la qualité de la levure utilisée dans une seconde phase, à effectuer une opération d'éclatement des cellules de levure, et, enfin, dans une troisième phase, une opération de stabilisation et d'inactivation des levures.

## Méthode de fabrication de levures lactiques pour animaux

La présente invention concerne une méthode de fabrication de levures lactiques destinées plus particulièrement à être ingérées par des animaux. La méthode suivant l'invention consiste en une transformation du métabolisme des levures des souches:
- Saccharomyces Cerevisiae,
- Saccharomyces Carlsbergensis,
- Zygosaccharomyces Torulaspidacae,
considérées individuellement ou en mélanges, avec multiplication cellulaire.

La fabrication des levures est connue depuis longtemps et on pourra, à ce sujet, se reporter à l'ouvrage "Levure et Panification", par Fould-Springer, édité chez "Nathan-Communications", en 1988. En fait, les techniques de culture des microorganismes, tels que les levures, évoluent constamment comme le montre le grand nombre de brevets d'invention relevant de la sous-classe C12N-001/ de la CBI.

Un objet de l'invention consiste à prévoir une méthode de fabrication qui, à partir d'un milieu de culture, permet d'ob tenir des levures lactiques ayant un taux plus élevé d'acides aminés et principalement de protéines.

Suivant une caractéristique de l'invention, la méthode consiste, dans une première phase, à réaliser une fermentation lente par procédé physico-chimique à basse température de 18 à 38° C, d'une durée comprise entre 1 et 72 heures, sous agitation programmée, d'un mélange de composition suivante:
- 30 à 80 % Levures humides ou levures sèches ou levure de bière ou sous-produit de fermentation de bière ou sous-produit de fabrication des levures à cellules vivantes.
- 1 à 10 % Mélasse de canne à sucre ou de betterave sous forme de sirop ou de poudre.
- 10 à 35 % Lactose
- 0,5 à 5 % Acide lactique
- 0,1 à 2 % Ammoniaque
- 0,1 à 2 % Acide citrique
- 0,1 à 2 % Soufre
- 0,025 à 1 % Acide pantothénique
- 0,025 à 1 % Amide nicotinique
- 0,050 à 1 % Vitamine B1
- 0,050 à 1 % Vitamine C
- 0,050 à 2 % dl-Méthionine
- 0,050 à 2 % Choline chlorure
- 0,050 à 2 % Lysine chlorhydrate
- 0,100 à 2 % Hypophosphite de magnésium
- 0,100 à 2 % Chlorure de potassium
- 0,100 à 2 % Chlorure de sodium
- 0,500 à 5 % Sorbitol
- 2 à 12 % Urée

avec injection d'air en quantité déterminée en fonction de la température, de la rapidité de fermentation, du volume du fermentateur et de la qualité de la levure utilisée.

Après transformation du métabolisme des levures par la méthode décrite ci-dessus, le mélange total ainsi obtenu subit un second traitement physico-chimique par chauffage à 72° C pendant 20 minutes minimum avec un apport de 2,6 à 10 % de chlorure de sodium pour éclater la paroi de la cellule de levure afin d'en faciliter la digestibilité par les animaux.

Ensuite, le produit est rendu inactivé par un apport de 2,6 à 10 % d'un complexe phosphorique (sels de phosphore, acide phosphorique, anhydride phosphorique, polyphosphates).

Enfin, le produit inactivé peut être conditionné en l'état sous forme semi-liquide en suspension, ou transformé en poudre par un moyen de séchage en utilisant, par exemple, un appareil du type séchoir à billes ou à turbine ou à buse ou sur cylindre.

Le produit terminé soit sous la forme semi-liquide en suspension ou en poudre doit titrer moins de 10 000 cellules revivifiables par gramme.

Dans un exemple de mise en oeuvre de la méthode de l'invention, qui a conduit à un produit fini satisfaisant, en partant de levures de bière et de panification, on a pris: 346 kg de levure' de bière à 20 % de matières sèches, 300 kg de levure de panification à 30 % de matières sèches, 20 kg de mélasse sous forme de sirop, 250 kg de lactose, 10 kg d'acide lactique, 2 kg d'amoniaque, 500 g d'acide citrique, 500 g de soufre, 260 g d'acide pantothénique, 260 g d'amide nicotinique, 1500 g de vitamine B1, 2500 g de vitámine C, 500 g de dl-méthionine, 1,5 kg de choline chlorure, 500 g de lysine chlorhydrate, 2 kg d'hypophosphite de magnésium, 500 g de chlorure de potassium, 7,2 kg de chlorure de sodium, 35 kg de sorbitol, 50 kg d'urée à 46 %, ce qui correspond à 1000 kg de produits mélangés. On a ensuite ajouté 26 kg de chlorure de sodium et 50 kg d'acide phosphorique à 75 % afin d'inactiver le produit obtenu.

Le rendement de l'opération a été très bon puisque l'on obtient 825 kg de levures pour 1000 kg de produits de départ. En pratique, selon les proportions des souches de levure utilisées, on peut attendre, toujours pour 1000 kg de produits, entre 700 et 900 kg de levures à l'arrivée.

## Revendications

1) Méthode de fabrication de levures lactiques destinées plus particulièrement à être ingérées par des animaux, caractérisée en ce qu'elle consiste, dans une première phase, à réaliser une fermentation lente par procédé physico-chimique à basse température de 18 à 38° C, d'une durée comprise entre 1 et 72 heures, sous agitation programmée, d'un mélange de composition suivante:

- 30 à 80 % Levures humides ou levures sèches ou levure de bière ou sous-produit de fermentation de bière ou sous-produit de fabrication des levures à cellules vivantes.
- 1 à 10 % Mélasse de canne à sucre ou de betterave sous forme de sirop ou de poudre.
- 10 à 35 % Lactose
- 0,5 à 5 % Acide lactique
- 0,1 à 2 % Ammoniaque
- 0,1 à 2 % Acide citrique
- 0,1 à 2 % Soufre
- 0,025 à 1 % Acide pantothénique
- 0,025 à 1 % Amide nicotinique
- 0,050 à 1 % Vitamine B1
- 0,050 à 1 % Vitamine C
- 0,050 à 2 % dl-Méthionine
- 0,050 à 2 % Choline chlorure
- 0,050 à 2 % Lysine chlorhydrate
- 0,100 à 2 % Hypophosphite de magnésium
- 0,100 à 2 % Chlorure de potassium
- 0,100 à 2 % Chlorure de sodium
- 0,500 à 5 % Sorbitol
- 2 à 12 Urée

avec injection d'air en quantité déterminée en fonction de la température, de la rapidité de fermentation, du volume du fermentateur et de la qualité de la levure utilisée dans une seconde phase, à effectuer une opération d'éclatement des cellules de levure, et, enfin, dans une troisième phase, une opération de stabilisation et d'inactivation des levures.

2) Méthode suivant la revendication 1, caractérisé en ce qu'elle s'applique aux trois couches de levure:
- Saccharomyces Cerevisiae
- Saccharomyces Carlsbergebsis,
- Zygosaccharomyces Torulespidacae,
Considérées indivisuellement ou en mélange de deux d'entre elles ou des trois.

3) Méthode suivant la revendication 1 ou 2, caractérisée en ce que l'opération d'éclatement des cellules est réalisée par chauffage à 72° C pendant 20 minutes minimum avec un apport de 2,6 à 10 % de chlorure de sodium.

4) Méthode suivant l'une des revendications 1 à 3, caractérisée en ce que l'opération de stabilisation et d'inactivation est réalisée par un apport de 2,6 à 10% d'un complexe phosphorique.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 538 957 (S.A. DES LABORATOIRES ROBERT ET CARRIERE) <br> * le document en entier * <br> --- | 1,2 | C 12 N 1/16 <br> A 23 J 1/18 <br> A 23 K 1/00 // <br> (C 12 N 1/16 <br> C 12 R 1:86 <br> C 12 R 1:865) |
| A | FR-A-2 581 055 (FIVES-CAIL BABCOCK S.A.) <br> * abrégé; page 1, ligne 31 - page 2, ligne 5; page 5, ligne 21 - page 6, ligne 21; revendications * <br> --- | 1,2 | |
| A | FR-A-2 439 819 (FROMAGERIES BEL et al.) <br> * le document en entier * <br> --- | 1,2 | |
| A | GB-A- 952 713 (SCHWARZ BIO RESEARCH INC.) <br> * page 1, colonne 2, ligne 63 - page 2, colonne 1, ligne 22 * <br> --- | 3,4 | |
| A | EP-A-0 039 415 (SOCIETE DES PRODUITS NESTLE S.A.) <br> * page 1, ligne 20 - page 2, ligne 30; page 4, lignes 16-20 * <br> ----- | | **DOMAINES TECHNIQUES RECHERCHES (Int. Cl.5)** <br><br> C 12 N 1/00 <br> A 23 J 1/18 |

Le présent rapport a été établi pour toutes les revendications

| Lieu de la recherche | Date d'achèvement de la recherche | Examinateur |
|---|---|---|
| BERLIN | 16-07-1990 | JULIA P. |